(19) Europäisches Patentamt
European Patent Office
Office européen des brevets

(11) **EP 0 462 541 B1**

(12) **EUROPEAN PATENT SPECIFICATION**

(45) Date of publication and mention
of the grant of the patent:
**02.04.1997 Bulletin 1997/14**

(51) Int Cl.6: **G09G 3/36**

(21) Application number: **91109900.0**

(22) Date of filing: **17.06.1991**

(54) **Image information control device and display system**

Bildinformationssteuergerät und Anzeigesystem

Dispositif de commande d'information d'image et système d'affichage

(84) Designated Contracting States:
**AT BE CH DE DK ES FR GB GR IT LI LU NL SE**

(30) Priority: **18.06.1990 JP 160499/90**

(43) Date of publication of application:
**27.12.1991 Bulletin 1991/52**

(73) Proprietor: **CANON KABUSHIKI KAISHA**
**Tokyo (JP)**

(72) Inventors:
• **Miyamoto, Katsuhiro, c/o Canon K.K.**
**Ohta-ku, Tokyo (JP)**
• **Inoue, Hiroshi, c/o Canon K.K.**
**Ohta-ku, Tokyo (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4**
**80336 München (DE)**

(56) References cited:
**EP-A- 0 288 168**        **EP-A- 0 411 464**

• **IEEE TRANSACTIONS ON CONSUMER**
**ELECTRONICS vol. CE-33, no. 3, August 1987,**
**NEW YORK, N.Y., USA pages 359 - 365; TSUGUJI**
**TACHIUCHI ET AL.: 'A color LCD controller.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to an image information control apparatus for use in a display system, particularly a display system employing ferroelectric liquid crystal with memory property.

The liquid crystal display systems required in recent personal computers and work stations are becoming larger in size and finer in resolution year after year, and are required also to be compatible with the conventional personal computers and work stations.

For example, in the widely utilized IBM PC/AT computer, there are available various display modes for the display system, such as CGA (Color Graphics Array), EGA (Enhanced Graphics Array), VGA (Video Graphics Array) and 8514/A, which are mutually different in the resolution and the number of displayable colors.

In order to display these display modes in a single display system, there may be employed a cathode ray tube system, such as Multisync II, Multisync 3D, Multisync 4D or Multisync 5D supplied by NEC, but it has been difficult, in the liquid crystal display system required in the lap-top personal computers and word processors, to display multiple display modes with a single display system.

Particularly in the display system utilizing ferroelectric liquid crystal with information memory property, desirable for achieving a large-sized display and a higher resolution, the scanning operation for high-resolution display has been achieved by a low frame frequency drive (5 - 20 Hz) as disclosed in the Japanese Laid-open Patent 63-65494 and in the European Patent application EP-A-318050. Said low frame frequency drive is conducted in synchronization with the communication of image information.

If the display mode is varied in this operation, the synchronization between the low frame frequency drive and the communication of image information is destructed, thus leading to an inconvenience.

Also in the display system utilizing ferroelectric liquid crystal, the drive frequency varies according to the external temperature, in order to compensate the temperature dependence of threshold characteristics specific to the ferroelectric liquid crystal, so that the time required for data writing of a line varies accordingly. For this reason, in order to synchronize the low frame frequency drive with the communication of image information in such display system, the completion of writing of information of a line is informed by a horizontal synchronization signal HSYNC to a graphic controller, 'which controls the transfer and communication of the image information (written by the host CPU into VRAM). In response thereto said graphic controller transfer the image information of a line to the drive device of the display system.

In order to adopt the above-explained communication system (external synchronization system) it is necessary to modify a software, called BIOS (Basic input output system), for controlling the image information in the graphic controller.

This fact gives rise to a drawback of loss of compatibility with the application softwares designed for cathode ray tube displays. For example the palette (device for converting image information into color information) in the graphic controller is designed to be accessed during the vertical flyback period of the cathode ray tube and to convert the color information according to the instruction of the host CPU. Therefore, if the access to said pallette is made in the external synchronization system, the timing of color conversion becomes different from that in the cathode ray tube display system, because the vertical flyback period in each frame is dependent on the frame cycle of the ferroelectric liquid crystal display panel. Thus, in an application software involving frequency color conversions of the display, the conversion speed becomes different from that in the cathode ray tube display system and the application software itself loses the compatibility with the cathode ray tube display system. Also certain application softwares rely on counting of the number of frames for proceeding to a next step. Also in such softwares, the time to the next step becomes different from that in the cathode ray tube display system, so that the compatibility with the cathode ray tube displays is difficult to achieve in terms of the processing speed.

Furthermore, in the display system utilizing ferroelectric liquid crystal, the output procedure of the image information in VRAM is predetermined in order to achieve interlaced scanning and has to be modified according to the driving temperature, and the temperature information is for this purpose supplied to the graphic controller. Upon receiving said information, the graphic controller has to interrupt the access to the VRAM for a certain period, in order to vary the access procedure to the VRAM. This fact also makes the compatibility with the cathode ray tube display system more difficult to achieve.

Moreover, in the publication "A Color LCD Controller" by T. Tachiuchi et. al., in IEEE Transactions on Consumer Electronics, Vol. CE-33 (1987) August, NO. 3 there is disclosed an arrangement of a color LCD controller operable as an interface between a CRT controller circuit and a color LCD display. However, once set, all timing relations in this prior art controller are fixed. Therefore, it is not possible to adapt timing relations during controller operation to parameter variations which may occur during operation of the LCD panel.

It is therefore an object of the present invention to provide an image information control apparatus with improved compatibility with a CRT display system.

This object is achieved by an image information control apparatus according to claim 1.

Fig. 1 is a block diagram of the apparatus embodying the present invention;

Fig. 2 is a flow chart of the control sequence of the present invention;

Fig. 3 is a block diagram of an operation sequence control unit employed in the present invention;

Fig. 4 is a timing chart of the functions of a display system of the present invention;

Fig. 5A shows a reference table employed in the present invention, with corresponding charts; and

Fig. 5B shows a tolerance table for 1H employed in the present invention, with corresponding charts.

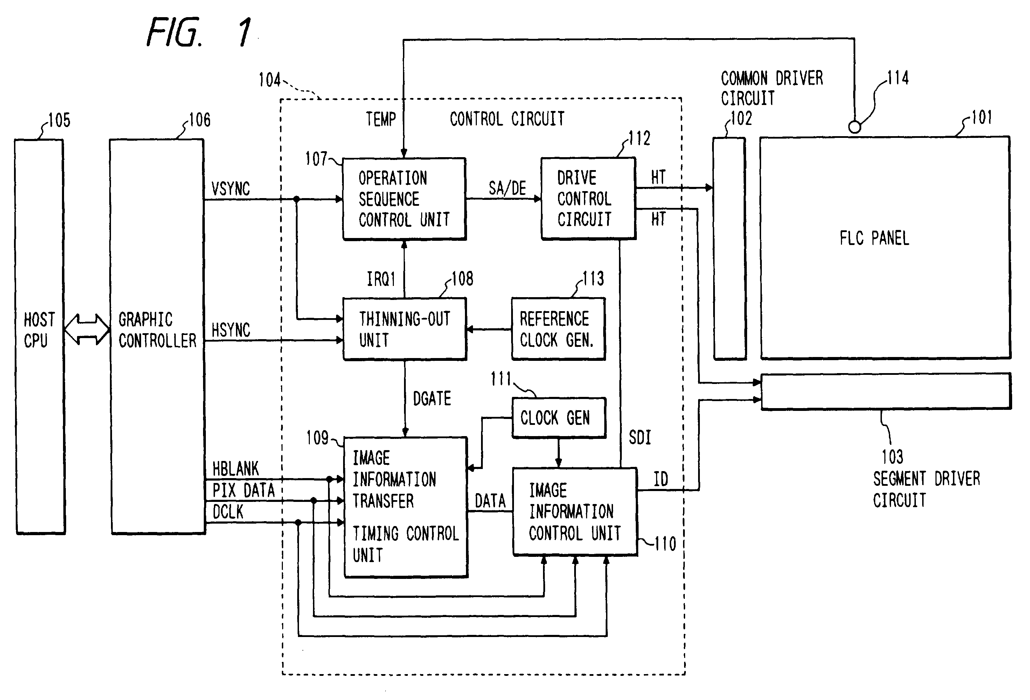

Fig. 1 is a block diagram of a display system according to the present invention, in which are shown: a ferroelectric liquid crystal (FLC) panel 101; a common (scanning line) driver circuit 102 capable of access to an arbitrary line according to a scanning address; a segment (information line) driver circuit 103 for supplying a predetermined line with information signal corresponding to image information; a control circuit 104; a host central processing unit (CPU) 105 such as a PC/AT manufactured by IBM; a graphic controller 106, such as VGA, for effecting display control for the host CPU 105; an operation sequence control unit 107 for controlling the operation sequence of the control circuit 104; a thinning control unit 108 for skipping the image information, from the graphic controller 106, by the unit of a line; an image information transfer timing control unit 109 for converting the transfer rate and timing of the image information from the graphic controller 106 to those suitable for the segment driver circuit 103; an image information control unit 110 for converting the image information into those ID1, ID2,... transferable at a predetermined interval; a clock generator 111 for generating transfer clock signals for the segment driver circuit 103, a drive control circuit 112 for controlling the write timing of a line to the FLC panel 101, by sending control signals to the common driver circuit 102 and the segment driver circuit 103 for generating suitable drive wave forms; a reference clock generator 113 for generating reference clock signals to be used for detecting the interval of the horizontal synchronization signal HSYNC; and a temperature sensor 114 for detecting the ambient temperature of the FLC panel 101.

[Signals]

Between the control circuit 104 and the graphic controller 106 there are provided lines for the following signals, which are released by a standard graphic controller such as VGA:

1) VSYNC: vertical synchronization signal for determining the timing of a frame. In case of VGA, the interval of this signal is 1/70 or 1/60 sec.;

2) HSYNC: horizontal synchronization signal for determining the timing of a line. In case of VGA, the interval of this signal is 31.8 μsec.;

3) HBLANK: horizontal blanking signal. Image information or border image information is given on PIXDATA, respectively said signal is at the "H" or "L" level;

4) PIX DATA: image information signal, written by the host CPU 105 into the VRAM (image information memory) in the graphic controller 106 and released therefrom;

5) DCLK: dot clock signal for determining the dot timing of PIX DATA.

[Basic function]

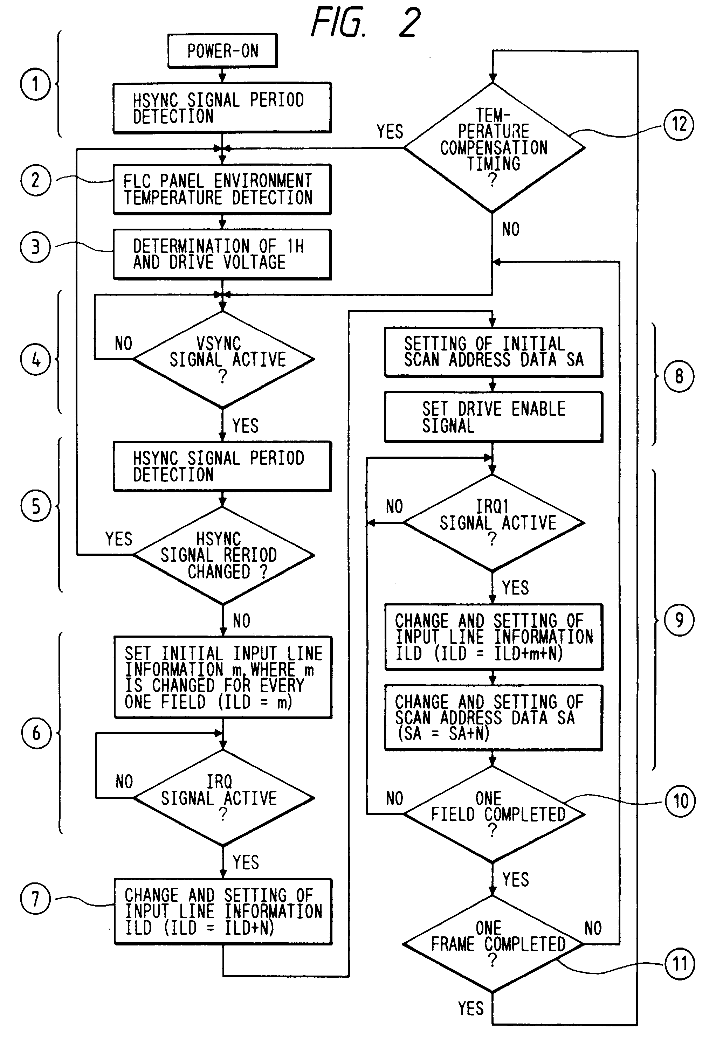

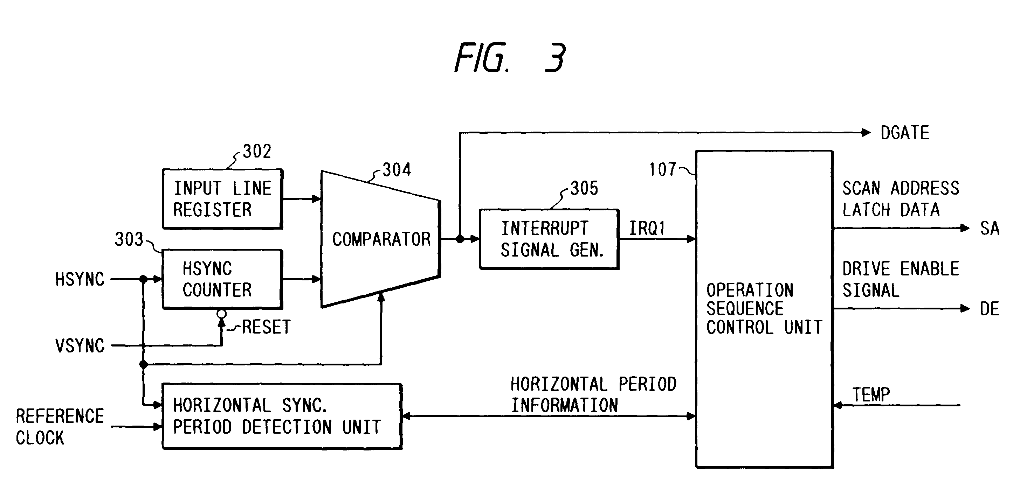

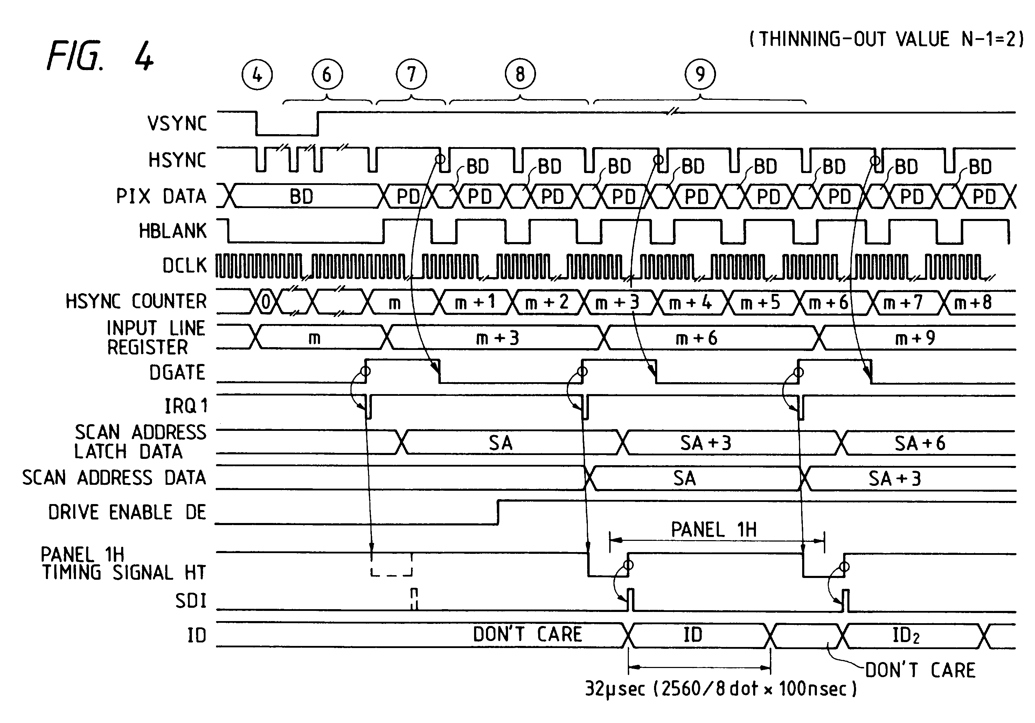

Fig. 2 is a flow chart of the basic function of the control circuit 104. Fig. 3 is a block diagram of the thinning control circuit 108 employed in the present invention, and Fig. 4 is a timing chart of said circuit.

In the following the basic function shown in Fig. 2 will be explained in detail, with reference to Figs. 1, 3 and 4. The numbers indicating the functional periods, appearing in the following description, coincide with those in Figs. 2 and 4. At first the host CPU 105 generating the image information causes the graphic controller 106, according to the BIOS software of the graphic controller 106 for controlling the VRAM, to generate the above-mentioned signals with the same timings and sequence as in the cathode ray tube display system.

(1) When the power supply is turned on, the control circuit 104 compares the reference clock signals from the reference clock generator 113 with the HSYNC signal in a horizontal synchronization period detection unit 301 shown in Fig. 3, and detects the interval of the HSYNC signal by counting the number of reference clock signal within an interval of the HSYNC signal, and sends the obtained information to an operation sequence control unit 107.

(2) The temperature sensor 114 senses the ambient temperature of the FLC panel 103 and sends the temperature information TEMP to the operation sequence control unit 107.

(3) The period required for one-line writing (horizontal scanning period) of the FLC panel 101 and the drive voltage V therefor are determined, from the interval of the HSYNC signal obtained in the period (1) in the detection unit 301 and the TEMP information obtained in the period (2). The details of said determination will be explained later. The image information is thinned or skipped in the unit of a line, based on thus determined horizontal scanning period (1H), and the number of line jumps in a vertical scanning is determined from said number of skipping. The skipping number (N - 1) corresponds to the number of line jumps in an interlaced scanning. If said number is "2", the first field scanning is achieved with the first, fourth, seventh,..., and (3F - 2)-th scanning lines, then the second field scanning is achieved with the second, fifth, eighth,..., and (3F - 1)-th scanning lines, and the third field scanning is achieved with the third, sixth, ninth,..., and 3F-th scanning lines, wherein F is an integer.

Also in the present invention, the order of first to third field scanning operations is not limited to what is described above, but there may be achieved a random interlaced scanning in which, for example, the second field scanning explained above is conducted first and the first one explained above is conducted second. Such scanning method is disclosed for example in the Japanese Laid-open Patent No. 63-65494 and in the Japanese Patent Application No. 63-285141 (filed Nov. 11, 1988), and such multiple interlaced scanning may also be employed in the present invention.

(4) After calculating of 1H, driving voltage and skipping number, the operation sequence control unit 107 awaits that the VSYNC signal from the graphic controller 106 becomes active.

(5) After confirming the active state of the VSYNC signal, the operation sequence control unit 107 again detects the interval of the HSYNC signal, in order to detect an eventual change in said interval by comparison with the interval detected in the period (1). This operation is conducted because, in certain graphic controllers, the interval of the HSYNC signal is varied by the host CPU 105. In the presence of any change, the sequence returns to the period (2) to repeat the sequence of varying 1H and the driving voltage. These operations are repeated whenever the VSYNC signal is rendered active.

(6) The operation sequence control unit 107 sets, in an input line register 302, initial input line information m matching the output timing of image information (number of HSYNC signals before the start of image information and after VSYNC signal is rendered active) predetermined with the graphic controller 106. A HSYNC counter 303 is reset by the VSYNC signal and effects an up-count at each HSYNC signal.

The count of said counter is always supplied to a comparator 304 and is compared with the count of the input line register 302. When said two counts mutually coincide, the comparator 304 releases an "H" level signal DGATE, until the next downshift of the HSYNC signal.

Said DGATE signal is also supplied to an interruption signal generator 305, which at the upshift of the DGATE signal, generates an interruption signal IRQ1 for supply to the control unit 107.

(7) By said IRQ1 signal, the operation sequence control unit 107 can confirm that the image information of a line, set in the input line register 302, has been transferred, and sets the nextly required input line information in the input line register 302. The count of this information is the sum of the preceding count ILD (= m) of the input line register 302 and a value N obtained by adding "1" to the skip number "N - 1". In the example shown in Fig. 4, where the skip number N - 1 = 2, the count set in the input line register 302 is equal to ILD + 3 (m + 3, m + 6, m + 9,...).

On the other hand, the image information supplied to the PIX DATA line is once supplied, in this period, to the transfer timing control unit 109.

(8) The operation sequence control unit 107 sets, in the drive control circuit 112, initial scanning address latch data SA for writing into the FLC panel 101, and sends a drive enable signal DE to the drive control circuit 112, in order to drive the common driver circuit 102 and the segment driver circuit 103. In response to the "H" level of said drive enable signal DE, the drive control circuit 112 activates a SDI signal (trigger signal for image information transfer to the segment driver circuit 103) and a panel 1H timing signal HT (determining the 1H period of the FLC panel 101).

(9) The operation sequence control unit 107 receives the interruption signal IRQ1, serving as a transfer recognition signal for the image information corresponding to the count (ILD + 3 = m + 3, m + 6, m + 9,...) of the input line register. Upon confirming the reception of said signal, the operation sequence control unit 107 sets the corresponding image information in the input line register 302 and transfers it to the drive control circuit 112. Also upon confirming the reception of said signal, the control unit 107 sets the scanning address data (SA + N) in the input line register 302 and transfers said data to the drive control circuit 112.

The drive control circuit 112 sets, in the common driver circuit 102, the scanning address latch data SA set in the period (8). At the same time it generates the panel 1H timing signal HT for supply to the common drive circuit 102 and the segment driver circuit 103. Through this operation, the common driver circuit 102 effects the erasure of the addressed scanning line. The data writing in said addressed scanning line is conducted in the next panel 1H period, based on the image information transferred to the segment driver circuit 103.

Also during this period the drive control circuit 112 releases the SDI signal, and the image information DATA, entered from the timing control unit 109 in the period (7), are simultaneously transferred to the segment driver circuit 103 through the image data control unit 110, with a rate matching the signal transfer rate of the common driver circuit 102 the segment driver circuit 103. Fig. 4 shows the timing in case the image data ID of 2560 dots (each pixel composed of 4 dots for area gradation) are transferred to the segment driver circuit 103, in 8-bit parallel mode and with a cycle of 100 nsec. If the 1H of the panel is longer than the time required for data transfer with the above-mentioned rate, the segment driver circuit 103 remains in a waiting state after the data transfer, for a period corresponding to the difference.

(10) The operation sequence control unit 107 discriminates whether a field for the FLC panel 101 (a frame for the graphic controller) has been completed. The completion of a field is identified when the sum of the current input data ILD and "n" exceeds the count of the scanning address data transferred from the graphic controller 106. In such case the sequence returns to the period (4) to start the entry of the data of the next field. If said sum is smaller than said count, the sequence returns to the period (9) to repeat the subsequent operations.

(11) The operation sequence control unit 107 discriminates whether the completion of a field in the period (10) has been repeated N times. If already repeated N times, the FLC panel 101 has received the image information of a frame. If less than N times, the sequence returns to the period (4) to repeat the subsequent operations. At the same time the initial input line data m is increased stepwise for receiving the data of the next field. A random interlaced scanning operation is realized by an increment with a number randomly selected from 1 to N, instead of the increment by "1".

(12) If the data writing of a frame is completed in the period (11), the control circuit 104 discriminates whether the timing for temperature compensation for the FLC panel 101 has been reached. Said timing is determined according to the number of frames. If the frame image writing has been repeated by a predetermined number of times, the sequence returns to the period (2) to set 1H and the drive voltage anew and to repeat the subsequent operations. If not, the sequence returns to the period (4).

In Fig. 4, PD and BD respectively indicate image information and border information used in the VGA manufactured by IBM.

[Determination of 1H and drive voltage V]

In the period (3), optimum 1H and drive voltage V are determined according to the ambient temperature of the FLC panel 101 and the interval of the HSYNC signal.

The temperature characteristics of the FLC panel 101 are determined by said 1H and V. The operation sequence control unit 107 is provided therein with a table, indicating 1H and V as a function of the ambient temperature, for driving the FLC panel 101. An analog voltage detected by the temperature sensor 114 in proportion to the ambient temperature is converted into a digital value in the control unit 107, and said 1H and V are determined from said table, according to said digital value. Said determination however has to satisfy a condition that 1H is a multiple of the interval of the HSYNC signal supplied from the graphic controller 106, in order not to form an interruption in the driving operation of the FLC panel. The method of said determination will be explained in the following.

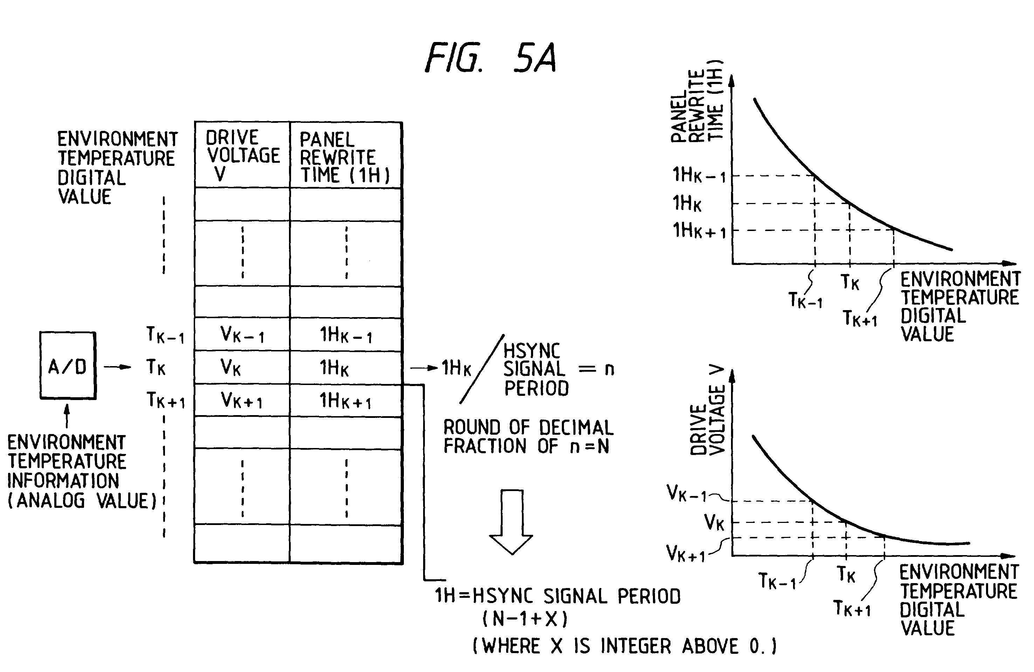

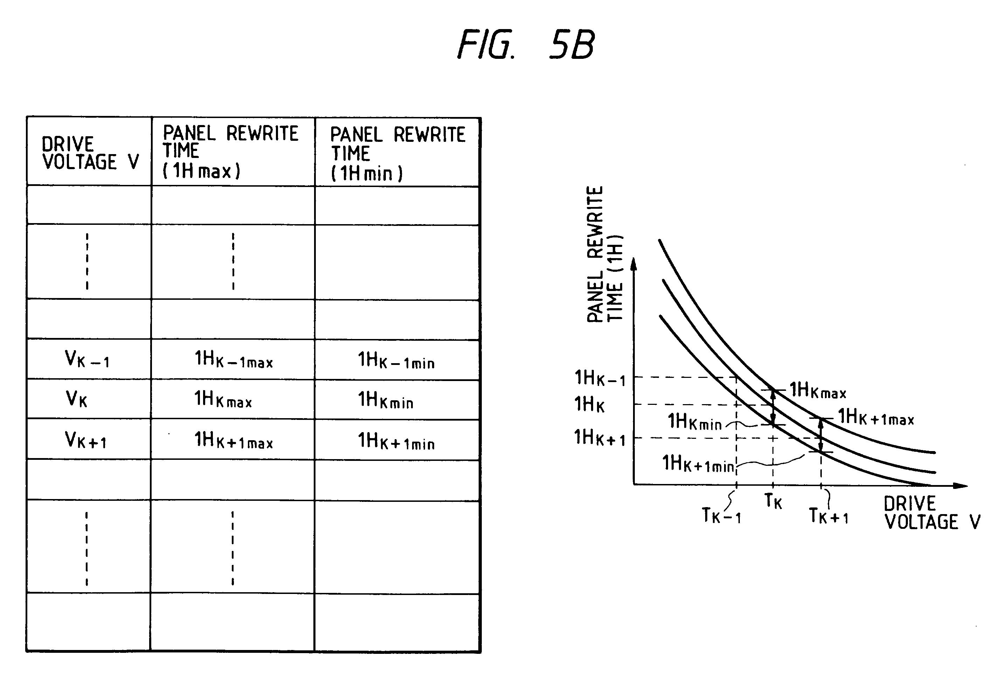

Fig. 5A shows a reference table indicating 1H and drive voltage V as a function of the ambient temperature, stored in the control unit 107, and corresponding charts, while Fig. 5B shows a table indicating the variable tolerance of 1H in relation to the drive voltage V.

1. At first, based on a digital value obtained by A/D conversion of an analog voltage corresponding to the ambient temperature, the optimum 1H and V for the FLC panel 101 are determined from the table shown in Fig. 5A.

2. The optimum values of 1H and V corresponding to a digital value Tk of the ambient temperature are respectively taken as 1Hk and Vk. A multiple N of the interval of the HSYNC signal is determined from the following equation. N - 1 represents the minimum value of the image information skipping by the unit of a line (interlace value):

$$1Hk/HSYNC \text{ signal interval} = n$$

$N =$    an integer obtained by rounding up the fraction of n.

3. Then the actual skip value is determined by adding an integer X to N-1 determined in 2. X is selected as 0 if the skip value is to be minimized. Then 1H is determined by multiplying (N - 1 + X) by the interval of the HSYNC signal:

$$1H = HSYNC \text{ interval} \times (N - 1 + X).$$

4. If 1H determined in 3. is equal to 1Hk, Vk becomes the drive voltage V. If 1H is not equal to 1Hk but is positioned between 1Hk and 1Hk + 1, the variable tolerances of 1H for Vk and Vk + 1 are determined from Fig. 5B. Said tolerance is also stored in advance in the control unit 107.

5. Then there is checked whether 1H is present between $1Hk_{max}$ and $1Hk_{min}$ corresponding to Vk or between $1Hk+1_{max}$ and $1Hk+1_{min}$ corresponding to Vk + 1, determined in 4., and a value V corresponding to the section containing said 1H is selected as the drive voltage V.

If both sections contain 1H, the drive voltage V is determined corresponding to 1Hk or 1Hk + 1 closer to 1H.

The ferroelectric liquid crystal display panel and the driving method therefor can be those disclosed for example in the U.S. Patent No. 4,655,561 of Kanbe et al., or in the U.S. Patent No. 4,800,382 of Okada et al.

As explained in the foregoing, the present invention enables to achieve multiple interlaced writing in the FLC panel 101 without any change in the BIOS ROM present in the graphic controller 106 and originally designed for a cathode ray tube display system, by the use of a control circuit 104 which can transfer appropriate image information to the FLC panel and write said information thereto, only utilizing standard output signals for the cathode ray tube display system, available from the graphic controller. Therefore, even if the frame frequency for image information writing varies due to a change in the ambient temperature of the FLC panel 101, the application software for the cathode ray tube display system can be operated on the host CPU with preserved compatibility with the cathode ray tube display system.

## Claims

1. An image information control apparatus comprising:

   receiving means (109) for receiving image information transferred at a predetermined interval (HSYNC);
   controller means (107, 108, 110) for controlling said received image information; and
   output means (112, 110) for transferring the controller means output signal to a display panel (101);

   **characterized in that**
   said controller means (107, 108, 110) interlaces said received image information in such a manner that the interlaced image information can be transferred in synchronization with a designated horizontal scanning period (IH), said designated horizontal scanning period (1H) being designated according to a temperature (TEMP) of said display panel and said predetermined interval (HSYNC).

2. An image information control apparatus according to claim 1,
   **characterized in that**
   comparing means (301) for comparing said interval of transfer (HSYNC) of said received image information with reference clock signals is provided.

3. An image information control apparatus according to claim 2,
   **characterized in that**
   temperature detection means (114) for detecting the temperature (TEMP) of said display panel (101) are provided.

4. An image information control apparatus according to any of the claims 1 to 3,
   **characterized in that**
   said display panel (101) shows a memory effect.

5. An image information control apparatus according to any of the claims 1 to 3,
   **characterized in that**
   said display panel (101) is provided with ferroelectric liquid cristal.

6. An image information control apparatus according to claim 3,
   **characterized in that**
   said horizontal scanning period (1H) is rendered variable according to the driving voltage.

7. A display system comprising:

   a display panel (101) provided with matrix electrodes composed of scanning electrodes and information electrodes; driving means (102, 103) for driving said scanning and information electrodes;
   generating means (105, 106) for generating image information and transferring said image information with a predetermined interval (HSYNC); and further comprising
   an image information control apparatus as set forth in any of claims 1 to 3.

8. A display system according to claim 7,
   **characterized in that**
   said display panel (101) shows a memory effect.

9. A display system according to claim 7,
   **characterized in that**
   said display panel (101) is provided with ferroelectric liquid cristal.

## Patentansprüche

1. Bildinformationssteuergerät mit

   einer Empfangseinrichtung (109) zum Empfang von in einem vorbestimmten Intervall (HSYNC) übertragenen Bildinformationen;
   einer Steuereinrichtung (107, 108, 110) zur Steuerung der empfangenen Bildinformationen; und
   einer Ausgabeeinrichtung (112, 110) zur Übertragung des Ausgangssignals der Steuereinrichtung zu einem Anzeigefeld (101);

   **dadurch gekennzeichnet, daß**
   die Steuereinrichtung (107, 108, 110) die empfangenen Bildinformationen derart zeilenverschachtelt, daß die zeilenverschachtelten Bildinformationen synchronisiert zu einer bestimmten Horizontal-Abtastperiode (1H) übertragen werden können, wobei die bestimmte Horizontal-Abtastperiode (1H) entsprechend einer Temperatur (TEMP) des Anzeigefeldes und dem vorbestimmten Intervall (HSYNC) bestimmt ist.

2. Bildinformationssteuergerät nach Anspruch 1, **gekennzeichnet durch**

eine Vergleichereinrichtung (301) zum Vergleichen des Intervalls (HSYNC) der Übertragung der empfangenen Bildinformationen mit Bezugstaktsignalen.

3. Bildinformationssteuergerät nach Anspruch 2, **gekennzeichnet durch**

eine Temperaturerfassungseinrichtung (114) zur Erfassung der Temperatur (TEMP) des Anzeigefeldes (101).

4. Bildinformationssteuergerät nach einem der Ansprüche 1 bis 3, **dadurch gekennzeichnet, daß**

das Anzeigefeld (101) einen Speichereffekt zeigt.

5. Bildinformationssteuergerät nach einem der Ansprüche 1 bis 3, **dadurch gekennzeichnet, daß**

das Anzeigefeld (101) ferroelektrische Flüssigkristalle aufweist.

6. Bildinformationssteuergerät nach Anspruch 3, **dadurch gekennzeichnet, daß**

die Horizontal-Abtastperiode (1H) entsprechend der Ansteuerspannung veränderlich ist.

7. Anzeigesystem mit

einem mit Matrixelektroden, die aus Abtastelektroden und Informationselektroden bestehen, versehenen Anzeigefeld; einer Ansteuereinrichtung (102, 103) zur Ansteuerung der Abtastelektroden und Informationselektroden; einer Erzeugungseinrichtung (105, 106) zur Erzeugung von Bildinformationen und zur Übertragung der Bildinformationen in einem vorbestimmten Intervall (HSYNC); und zudem mit einem Bildinformationssteuergerät nach einem der Ansprüche 1 bis 3.

8. Anzeigesystem nach Anspruch 7, **dadurch gekennzeichnet, daß**

das Anzeigefeld (101) einen Speichereffekt zeigt.

9. Anzeigesystem nach Anspruch 7, **dadurch gekennzeichnet, daß**

das Anzeigefeld (101) ferroelektrische Flüssigkristalle aufweist.

## Revendications

1. Appareil de commande d'informations d'images comprenant :

des moyens (109) récepteurs pour recevoir des informations d'images transférées à un intervalle (HSYNC) prédéterminé ; des moyens (107, 108, 110) de commande pour commander lesdites informations d'images reçues ; et des moyens (112, 110) de sortie pour transférer le signal de sortie des moyens de commande à un écran (101) d'affichage ;

caractérisé en ce que lesdits moyens (107, 108, 110) de commande entrelacent lesdites informations d'images reçues de telle manière que les informations d'images entrelacées puissent être transférées en synchronisme avec une période (1H) de balayage horizontal désignée, ladite période (1H) de balayage horizontal désignée étant désignée en fonction d'une température (TEMP) dudit écran d'affichage et dudit intervalle (HSYNC) prédéterminé.

2. Appareil de commande d'informations d'images selon la revendication 1, caractérisé en ce que des moyens (301) comparateurs pour comparer ledit intervalle de transfert (HSYNC) desdites informations d'images reçues avec des signaux d'horloge de référence, sont prévus.

3. Appareil de commande d'informations d'images selon la revendication 2, caractérisé en ce que des moyens (114) de détection de température pour détecter la température (TEMP) dudit écran (101) d'affichage sont prévus.

4. Appareil de commande d'informations d'images selon l'une quelconque des revendications 1 à 3, caractérisé en ce que ledit écran (101) d'affichage présente un effet de mémoire.

5. Appareil de commande d'informations d'images selon l'une quelconque des revendications 1 à 3, caractérisé en ce que ledit écran (101) d'affichage comporte un cristal liquide ferroélectrique.

6. Appareil de commande d'informations d'images selon la revendication 3,

    caractérisé en ce que

    ladite période (1H) de balayage horizontal est rendue variable en fonction de la tension d'attaque.

7.    Système d'affichage comprenant :

    un écran (101) d'affichage muni d'une matrice d'électrodes composée d'électrodes de balayage et d'électrodes d'informations ;
    des moyens (102, 103) d'attaque pour attaquer lesdites électrodes de balayage et d'informations ;
    des moyens (105, 106) générateurs pour générer des informations d'images et transférer lesdites informations d'images à un intervalle (HSYNC) prédéterminé, et comprenant en outre :
    un dispositif de commande d'informations d'images selon l'une quelconque des revendications 1 à 3.

8.    Système d'affichage selon la revendication 7, caractérisé en ce que :

    ledit écran (101) d'affichage présente un effet de mémoire.

9.    Système d'affichage selon la revendication 7,

    caractérisé en ce que :

    ledit écran (101) d'affichage comporte un cristal liquide ferroélectrique.

FIG. 1

EP 0 462 541 B1

# FIG. 2

① POWER-ON

HSYNC SIGNAL PERIOD DETECTION

② FLC PANEL ENVIRONMENT TEMPERATURE DETECTION

③ DETERMINATION OF 1H AND DRIVE VOLTAGE

④ VSYNC SIGNAL ACTIVE ? — NO
  YES

⑤ HSYNC SIGNAL PERIOD DETECTION

HSYNC SIGNAL RERIOD CHANGED ? — YES
  NO

⑥ SET INITIAL INPUT LINE INFORMATION m, WHERE m IS CHANGED FOR EVERY ONE FIELD (ILD = m)

IRQ SIGNAL ACTIVE ? — NO
  YES

⑦ CHANGE AND SETTING OF INPUT LINE INFORMATION ILD (ILD = ILD+N)

⑫ TEM-PERATURE COMPENSATION TIMING ? — YES
  NO

⑧ SETTING OF INITIAL SCAN ADDRESS DATA SA

SET DRIVE ENABLE SIGNAL

IRQ1 SIGNAL ACTIVE ? — NO
  YES

⑨ CHANGE AND SETTING OF INPUT LINE INFORMATION ILD (ILD = ILD+m+N)

CHANGE AND SETTING OF SCAN ADDRESS DATA SA (SA = SA+N)

⑩ ONE FIELD COMPLETED ? — NO
  YES

⑪ ONE FRAME COMPLETED ? — NO
  YES

10

## FIG. 3

EP 0 462 541 B1

FIG. 4

(THINNING-OUT VALUE N-1=2)

32μsec (2560/8 dot × 100nsec)

FIG. 5A

ENVIRONMENT TEMPERATURE DIGITAL VALUE

A/D ← ENVIRONMENT TEMPERATURE INFORMATION (ANALOG VALUE)

| ENVIRONMENT TEMPERATURE DIGITAL VALUE | DRIVE VOLTAGE V | PANEL REWRITE TIME (1H) |
|---|---|---|
| - - - - | - - - - | - - - - |
| $T_{K-1}$ | $V_{K-1}$ | $1H_{K-1}$ |
| $T_K$ | $V_K$ | $1H_K$ |
| $T_{K+1}$ | $V_{K+1}$ | $1H_{K+1}$ |
| - - - - | - - - - | - - - - |

$1H_K$ / HSYNC SIGNAL PERIOD = n

ROUND OF DECIMAL FRACTION OF n=N

⇒

1H = HSYNC SIGNAL PERIOD (N-1+X)

(WHERE X IS INTEGER ABOVE 0.)

PANEL REWRITE TIME (1H)

$1H_{K-1}$
$1H_K$
$1H_{K+1}$

$T_{K-1}$  $T_K$  $T_{K+1}$

ENVIRONMENT TEMPERATURE DIGITAL VALUE

DRIVE VOLTAGE V

$V_{K-1}$
$V_K$
$V_{K+1}$

$T_{K-1}$  $T_K$  $T_{K+1}$

ENVIRONMENT TEMPERATURE DIGITAL VALUE

# FIG. 5B

| DRIVE VOLTAGE V | PANEL REWRITE TIME (1H max) | PANEL REWRITE TIME (1H min) |
|---|---|---|
| | | |
| $\vdots$ | $\vdots$ | |
| | | |
| $V_{K-1}$ | $1H_{K-1max}$ | $1H_{K-1min}$ |
| $V_K$ | $1H_{Kmax}$ | $1H_{Kmin}$ |
| $V_{K+1}$ | $1H_{K+1max}$ | $1H_{K+1min}$ |
| | | |
| $\vdots$ | $\vdots$ | |
| | | |

EP 0 462 541 B1